(19) Europäisches Patentamt / European Patent Office / Office européen des brevets

(11) **EP 3 995 824 B1**

(12) **EUROPÄISCHE PATENTSCHRIFT**

(45) Veröffentlichungstag und Bekanntmachung des Hinweises auf die Patenterteilung:
**05.07.2023 Patentblatt 2023/27**

(21) Anmeldenummer: **20206230.3**

(22) Anmeldetag: **06.11.2020**

(51) Internationale Patentklassifikation (IPC):
**G01N 29/032** (2006.01) **G01N 29/14** (2006.01)

(52) Gemeinsame Patentklassifikation (CPC):
**G01N 29/032; G01N 29/14;** G01N 2291/02408;
G01N 2291/02809

(54) **ERMITTELN EINER KONZENTRATION VON POTENTIELL INFEKTIÖSEN AEROSOL-PARTIKELN IN EINEM VOLUMEN**

DETERMINATION OF A CONCENTRATION OF POTENTIALLY INFECTIOUS AEROSOL PARTICLES IN A VOLUME

DÉTERMINATION D'UNE CONCENTRATION DES PARTICULES D'AÉROSOL POTENTIELLEMENT INFECTIEUSES DANS UN VOLUME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.05.2022 Patentblatt 2022/19**

(73) Patentinhaber: **Siemens Aktiengesellschaft 80333 München (DE)**

(72) Erfinder:
• **Stier, Oliver**
  **12163 Berlin (DE)**
• **Theile, Oliver**
  **13437 Berlin (DE)**

(74) Vertreter: **Siemens Patent Attorneys Postfach 22 16 34 80506 München (DE)**

(56) Entgegenhaltungen:
• **Asadi Sima, Cappa Christopher D, Wexler Anthony S, Bouvier Nicole M, Ristenpart William D: "The Impact of Vocalization Loudness on COVID-19 Transmission in Indoor Spaces", , 8. September 2020 (2020-09-08), XP002802739, Gefunden im Internet: URL:https://arxiv.org/ftp/arxiv/papers/200 9/2009.04060.pdf [gefunden am 2021-04-20]**
• **ASADI SIMA ET AL: "Aerosol emission and superemission during human speech increase with voice loudness", SCIENTIFIC REPORTS, Bd. 9, Nr. 1, 1. Dezember 2019 (2019-12-01), Seite 2348, XP55797238, DOI: 10.1038/s41598-019-38808-z Gefunden im Internet: URL:https://www.nature.com/articles/s41598 -019-38808-z.pdf> [gefunden am 2021-04-20]**
• **"KAY Die CO2-Ampel für gesunde Atemluft", , Seiten 1-4, XP002802740, Gefunden im Internet: URL:https://7d12ed95-4b12-48ac-b11c-ee11db 1f26f5.filesusr.com/ugd/ebe439_b64f2937eee 047eeadf9937d8777c643.pdf [gefunden am 2021-04-20]**

EP 3 995 824 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Ermitteln einer Konzentration von potentiell infektiösen Aerosol-Partikeln in einem Volumen, z. B. in einem Besprechungszimmer. Die Erfindung betrifft weiterhin ein Verfahren zum Ermitteln einer Inhalationsdosis, eine Vorrichtung zum Ermitteln einer Konzentration, eine Steuerung sowie eine Anzeigevorrichtung.

Ein derartiges Verfahren sowie eine derartige Vorrichtung können in Besprechungszimmern zum Einsatz kommen.

Ein Aerosol ist als ein heterogenes Gemisch (eine Dispersion) aus festen oder flüssigen Schwebeteilchen in der (Atem-)Luft zu verstehen. Von Interesse ist insbesondere der Anteil von potentiell infektiösen Aerosol-Partikeln in der Luft im Volumen. Als infektiös gilt dabei ein Aerosol, das von einer Person/einem Emittenten emittiert wird, die/der mit einer Krankheit infiziert ist, die sich bekanntermaßen über Aerosole verbreiten kann.

Als Stand der Technik kann das Dokument "The Impact of Vocalization Loudness on COVID-19 Transmission in Indoor Spaces", Asadi Sima, Cappa Christopher D, Wexler Anthony S, Bouvier Nicole M, Ristenpart William D (veröffentlicht im Internet, URL:https://arxiv.org/ftp/ arxiv/papers/2009/2009.04060.pdf), erwähnt werden, das offenbart, dass die Übertragung von Covid-19 in einem Raum, in welchem Personen Vokalisierungen machen, mit der Intensität dieser Vokaliserungen zunimmt.

Der Erfindung liegt die Aufgabe zugrunde, die Ermittlung einer Konzentration von potentiell infektiösen Aerosol-Partikeln zu verbessern.

Die Aufgabe wird durch ein Verfahren mit den im Anspruch 1 angegebenen Merkmalen gelöst. Das Verfahren zum Ermitteln einer Konzentration eines potentiell infektiösen Aerosols in einem Volumen, wobei das Volumen ein oder mehrere Emittenten des Aerosols umfasst, umfasst dabei insbesondere die folgenden Schritte:

- Erfassen zumindest eines zeitlichen Verlaufs einer akustischen Größe im Volumen, wobei die akustische Größe mit ein oder mehreren der Emittenten assoziiert ist,
- Ermitteln einer Emission des Aerosols für wenigstens einen der Emittenten basierend auf dem erfassten zeitlichen Verlauf der akustischen Größe und
- Ermitteln der Konzentration basierend auf der wenigstens einen Emission.

Die Emission kann dabei die Anzahl an festen und/oder flüssigen Schwebeteilchen (Aerosol-Partikel) sein, die ein Emittent abgibt oder die diesem zugeordnet werden. Es ist denkbar absolute Anzahlen an Partikeln zu ermitteln, es können weiterhin andere korrelierende Emissions-Werte oder dimensionslose mit der Emission korrelierende Hilfsgrößen verwendet werden.

Die Konzentration von potentiell infektiösen Aerosol-Partikeln im Volumen korreliert dabei mit der Anzahl der Aerosol-Partikel pro Volumen.

Die Emittenten sind dabei die im Raum, d. h. im Volumen, anwesenden Personen, die durch ihr Atmen, Sprechen, Singen, ... Aerosol-Partikel emittieren. Die Lautstärke, mit der eine Person (ein Emittent) spricht, schreit, singt, hustet und/oder niest korreliert mit der Emission von Aerosolen. Es wurde im Rahmen der vorliegenden Erfindung überaschenderweise festgestellt, dass sich die Emission und damit die Aerosolkonzentration in einem Raum mit einer so hohen Genauigkeit basierend auf einem Zeitverlauf ein oder mehrerer akustischer Größen ermitteln lässt, dass sich ein Infektionsrisiko sehr gut abschätzen lässt. Damit lässt sich vorteilhaft die Konzentration von potentiell infektiösen Aerosolen in Räumen bestimmen. Die daraufhin ergreifbaren Maßnahmen (Lüften / Verlassen des Raumes) senken eine Infektionswahrscheinlichkeit erheblich.

Der zeitlichen Verlauf der akustischen Größe kann ein Audiosignal aus dem Volumen V sein. Es ist denkbar, dass für jeden der Emittenten ein Audiosignal zur Verfügung steht (z.B. mit je einem Mikrofon pro Emittent). Im Audiosignal kann z. B. davon ausgegangen werden, dass die Amplitude direkt mit einer Emission von Aerosolen zu diesem Zeitpunkt korreliert. Weiterhin kann mit Mikrofonarrays und Frequenzanalyse gearbeitet werden, um den Emittenten Anteile eines Audiosignals logisch zuzuordnen.

Das Volumen ist dabei die Bezugsgröße des Raumes, in dem die Konzentration ermittelt werden soll. Das Volumen entspricht z. B. dabei dem Rauminhalt eines Raumes. Dieser Raum kann dabei neben einem Raum in einem Gebäude ebenso ein Fahrzeuginnenraum, ein Zugabteil, Räume in (Kreuzfahrt-)Schiffen oder eine Flugzeugkabine sein.

In einer weiteren Ausführungsform umfasst eine der akustischen Größen einen Schalldruckpegel und/oder ein Audiosignal im Volumen. Anhand einer empirischen Korrelation zwischen Lautstärke und Emission von Aerosol-Partikeln kann aus dem zeitlichen Verlauf des Schalldruckpegels und/oder dem Audiosignal die Emissionsrate von Aerosol-Partikeln pro Zeiteinheit ermittelt werden und daraus auf die Emission potentiell infektiöser Aerosole geschlossen werden.

In einer weiteren Ausführungsform wird zumindest ein Teil (ein einzelner Zeitabschnitt) von einem oder mehreren der zeitlichen Verläufe der akustischen Größe einem der Emittenten und/oder einer Gruppe von Emittenten zugeordnet. Durch Verfahren der Signalprozessierung der akustischen Größen und entsprechender Analysen ist eine Ortung einzelner Emittenten innerhalb des Volumens und eine Zuweisung der Signalabschnitte zu den Emittenten möglich. Dies geschieht im einfachsten Fall durch ein dediziertes Mikrofon pro Emittent. Wenn ein einzelnes Gerät mit integrierten Mikrofonen zur Verfügung gestellt werden soll, so hat es sich als vorteilhaft erwiesen, ein Mikrofonarray vorzusehen und anhand der damit aufgezeichneten akustischen Größen eine Zuordnung von Emittenten zu deren aufgezeichneten akustischen Größen (z.B. Sprache) vorzunehmen. Hier können nicht nur Phasenverschiebungsauswertungen, Triangulations- und Laufzeitberechnungen zur Lokalisierung der Emittenten im Volumen durchgeführt werden, sondern ebenso FFT (Fast Fourier Transformation) Analysen der Stimmen der Sprecher und/oder Sänger sowie weitere Analysemethoden zum Zweck ihrer ortsunabhängigen Erkennung angewandt werden.

Im Ergebnis werden Anteile von im Volumen emittierten akustischen Größen einzelnen Emittenten zugewiesen. So kann für jeden Emittenten ein individuelles Emissionsprofil erstellt werden.

In anderen Worten werden zumindest Teile des zeitlichen Verlaufs der akustischen Größe einem oder mehreren der Emittenten zugeordnet. Dies hat den Vorteil, dass dann direkt emittentenbezogen gerechnet werden kann. Eine Zuordnung ist aber ebenso auf Basis einer Emissionsrate und einer absoluten Emission möglich. Die Zuordnung der Teile kann dabei auf Basis von Stimmanalysen oder anderen akustischen Parametern durchgeführt werden.

Wird eine aus einer Gesamtlautstärke aller Emittenten ermittelte Emission verwendet, so bietet diese nur einen ungefähren Indikator der Emission von potentiell infektiösen Aerosolpartikeln und enthält keinen Hinweis darauf, von welchem Emittent die größte Gefahr ausgeht. Man könnte hier konservativ die gesamte Aerosolemission einem fiktiven Emittenten zuordnen.

Gemäß der Erfindung wird die Emission durch Integration einer Emissionsrate ermittelt. Die Emissionsrate wird dabei in Abhängigkeit des zumindest einen zeitlichen Verlaufs der akustischen Größe ermittelt. In anderen Worten kann die Differentialgleichung gelöst werden, die die zeitliche Änderung der Emission beschreibt. Die Emissionsrate kann dabei einen Zeitverlauf für ein oder mehrere Emittenten darstellen. Dies kann für jeden der Emittenten durchgeführt werden. Durch das Volumen V kann somit die Konzentration des Aerosols zum Zeitpunkt t im Raum ermittelt werden. Überschreitet die Konzentration einen Grenzwert, so kann eine Lüftungsempfehlung abgegeben, eine Lüftungsanlage angesteuert oder weitere Maßnahmen ergriffen werden.

Gemäß der Erfindung wird für eine Mehrzahl von Emittenten jeweils eine Emission bestimmt und die Konzentration wird basierend auf der größten der bestimmten Emissionen ermittelt. Alternativ oder ergänzend kann auch auf Basis der Verläufe der Konzentrationen für jeden Emittenten der Verlauf gewählt werden, der den größten Beitrag liefert. So kann der Emittent gewählt werden, von dem das größte Risiko ausgeht, das Risiko wird also nicht unterschätzt. Ist die Gruppe so groß oder ist die Inzidenz so hoch, so kann von mehreren infizierten ausgegangen werden. Dementsprechend können zur Ermittlung eines genauen Risikowertes die n Emittenten mit den n größten Emissionen zugrunde gelegt werden. Da das Verfahren in Echtzeit mit nur einer kleinen Verzögerung mitgerechnet werden kann, können jederzeit die Emittenten, die aktuell den größten Beitrag zur Konzentration liefern als Basis für eine Berechnung der Konzentration von potentiell infektiösen Aerosol-Partikeln liefern.

In einer alternativen oder ergänzenden Ausführungsform wird zur Bestimmung der potentiell infektiösen Konzentration die Emissionsrate berücksichtigt, die den größten Anteil zur potentiell infektiösen Konzentration beiträgt. Werden also mehrere Emissionsraten für mehrere Emittenten oder Gruppen von Emittenten bestimmt, so wird eine der Emissionsraten ausgewählt. Das Auswählen der Emissionsrate von der das größte Risiko ausgeht, die also den größten Beitrag zur Konzentration liefert, bietet einen gute Möglichkeit eine hohe Genauigkeit bei der Risikoabschätzung und eine geringe Neigung zur Überschätzung des Risikos zu erreichen.

Wird die gesamte akustische Situation nicht mehr differenzierbar, weil zu viele Emittenten gleichzeitig akustisch aktiv sind, also gleichzeitig reden, singen, husten und/oder niesen, so kann das Verfahren so ausgestaltet sein, dass die ermittelten Emissionen einem fiktiven Emittenten zugeordnet werden, dessen Emissionen dann wiederum zumindest Gruppen von Emittenten oder im Extremfall allen Emittenten zugeschlagen werden.

In einer Ausführungsform wird davon ausgegangen, dass ein definierbarer Anteilsfaktor der Emissionen bzw. der Konzentration als infektiös gilt. So kann beispielsweise bei sehr hohen Inzidenzen alles in den Raum emittierte als potentiell infektiös angesehen werden. Der Anteilsfaktor wäre dann eins. Bei niedrigeren Inzidenzen könnte davon ausgegangen werden das zumindest eine Person im Raum infektiös ist und dementsprechend eine Bewertung der aktuellen Aerosolkonzentration bzw. der Schadstoffmenge stattfinden. Die gegenteilige Annahme, dass kein Emittent infektiös ist, führt ja ohne weiteres zu Schadstoffmengen, -konzentrationen, -inhalationsdosen und Ansteckungsrisiken von Null, und ist nicht kompatibel mit dem Einsatzzweck des Verfahrens und der zugehörigen Vorrichtung. Es kann wohl aber für kurze Zeitspannen davon ausgegangen werden, dass kein Emittent infektiös ist, in dieser Zeit werden schlichtweg keine Emissionen generiert. Dies kann in Pausen der Fall sein.

In einer Ausführungsform wird zum Ermitteln der Konzentration und/oder der Emission eine Abnahme-Rate von potentiell infektiösem Aerosol-Partikeln berücksichtigt. Insbesondere eine Fensterlüftung, eine Klima-Anlage, eine Luftreinigung und/oder eine Absterben von Viren sind hier relevante Parameter. Für jede dieser Parameter kann eine Luftausrauschrate oder eine Luftwechselzahl definiert werden. Die Berücksichtigung einer Abnahme-Rate erhöht die Genauigkeit des Systems deutlich. Die Abnahme-Rate kann dabei bzgl. einer Emissionsrate vor einer Integration berücksichtigt werden. Dies ist in den Figuren genauer erläutert. Besonders genau kann die Konzentration ermittelt werden, wenn für das Volumen eine Luftaustausch-Bilanz definierbar oder schätzbar ist, was je nach Randbedingungen meistens möglich ist. Es wäre sogar möglich, dass im Freien, bspw. auf einem belebten Platz, gewisse Annahmen bzgl. des Luftaustausches (z. B. sehr geringe Windstärke) getroffen werden. Auf Basis des Verfahrens könnte dann ein Zufluss von Personen zu diesem Platz gesteuert werden.

In einer weiteren Ausführungsform wird zum Ermitteln einer Abnahme-Rate von potentiell infektiösen Aerosol-Partikeln ein in der Ausatemluft der im Raum anwesenden Personen vorkommendes Gas, insbesondere $CO_2$ und/oder $H_2$, erfasst. Entsprechende Sensoren können hier den Abfluss vom Raumluft erheblich besser quantifizieren und einen entsprechenden Verdünnungseffekt bei der Konzentrationsberechnung berücksichtigen.

Eine weitere Ausführungsform umfasst eine Gewichtung der Emission auf Basis eines Erkennens von akustischen Ereignissen. Als akustische Ereignisse kommen dabei insbesondere Husten, Niesen, Sprechen, Schreien und/oder Singen in Frage und können im zeitlichen Verlauf der akustischen Größe erkannt werden. Durch eine Klassifizierung von akustischen Ereignissen in den zeitlichen Verläufe der akustischen Größen kann eine Abhängigkeit von einer Messung einer Lautstärke deutlich verringert werden und die Genauigkeit der Ermittlung erheblich verbessert werden. Wird beispielsweise ein Sprechen erkannt, und kann dieses Sprechen einem Emittenten zugeordnet werden, so kann für diesen Emittenten eine sehr genaue Emission ermittelt werden. Werden außergewöhnliche Ereignisse erkannt, beispielsweise ein Niesen oder ein Husten, so kann das Niesen und/oder das Husten entsprechend mit einem Emissionsaufschlag versehen werden und dem entsprechenden Emittenten zugeordnet werden. Hier kann eine Zuordnung durch eine Ortung des Emittenten durch ein Mikrofonarray erreicht werden, denn Niesen und Hustengeräusche sind nicht ohne weiteres anhand von Stimmprofilen individuell zuzuordnen. Ebenso ist denkbar, dass außergewöhnliche Ereignisse allen Emittenten als Emission aufgeschlagen werden, wenn nicht erkennbar ist, wer Verursacher des klassifizierten Geräuschs war.

Besonders vorteilhaft ist es, wenn die Emissionen emittentenbezogen ermittelt werden. Wenn nicht klar zuordenbare Emissionen ermittelt werden, können diese auf die Emittenten verteilt werden. Hier kann beispielsweise der aktuell stärkste Emittent einen Zuschlag bekommen oder im Durchschnitt auf alle verteilt werden.

Wenn Sprache oder Gesang registriert wird, wird vorzugsweise versucht, die der Lautstärke entsprechende Emission einem bereits bekannten Emittenten zuzuordnen. Falls das nicht gelingt, wird ein neuer Emittent angelegt und dem neuen Emittent diese Emission zugeordnet. Falls die Zuordnung aus anderen Gründen nicht gelingt, z. B. weil die Lautstärke darauf hindeutet, dass sie nicht von einer einzelnen Person herrührt, kann folgendermaßen verfahren werden. Stimmanalyse funktioniert am besten, solange die Sprecher abwechselnd reden. Falls mehrere Personen gleichzeitig sprechen, kann über ihre räumliche Unterscheidung (Triangulation oder eigenes Mikrofon) eine Zuordnung ihrer Redezeitanteile und damit Emissionen dennoch ermöglicht werden, solange es sich nicht um eine sogenannte Cocktailparty handelt. Die Cocktailparty steht typisch für Situationen, in denen Schwerhörige Gesprächen nicht mehr folgen können, weil die räumliche Trennung simultaner Unterhaltungen nicht gelingt.

Der von Hörgeräteakustikern als Cocktailparty-Effekt bezeichnete Unterscheidbarkeitsverlust von Sprechern kann auch beim vorliegenden Verfahren auftreten, etwa wenn SchülerInnen in einem Klassenraum ihre Plätze wechseln und dabei gleichzeitig sprechen, lachen oder schreien.

In einer weiteren Ausführungsform werden Abschnitte von zeitlichen Verläufen von akustischen Größen und/oder daraus resultierende Emissionen, die keinem Emittenten zugeordnet werden können, mit einem Faktor gewichtet in der Konzentrationsberechnung oder der Emissionsberechnung berücksichtigt.

In solchen Ausnahmefällen speichert das System vorzugsweise die zugehörige Emission oder Emissionsrate in einer separaten, unpersönlichen Emissionshistorie ab. Diese Emissionen werden also nicht einem bestimmten Emittenten zugeordnet, sondern einem abstrakten Emittent.

Lässt die Lautstärke darauf schließen, dass an der Entstehung des Geräuschs eine bekannte (oder schätzbare) Anzahl an Emittenten beteiligt waren, dann wird davon ausgegangen, dass maximal einer der Emittenten infektiös ist, und es wird somit die Emissionsrate und/oder die Emission durch die Anzahl der Emittenten geteilt. Ist die Inzidenz besonders hoch, kann wie bereits beschrieben auch davon ausgegangen werden, dass mehrere der Emittenten als infiziert gelten und damit die Emission mit der Anzahl der infizierten multipliziert und durch die Anzahl der am Geräusch Beteiligten geteilt werden. Diese Normierung ist nötig, damit die Menge der ansteckenden Aerosole nicht überschätzt wird. Ein Geschrei kann z. B. anhand der Lautstärke auf drei Kinder als Emittenten zurückgeführt werden, allerdings ist in der Schulklasse per Voraussetzung nur ein Infizierter vorhanden. Also kann höchstens ein Drittel der beim Schreien ausgeatmeten Aerosol-Partikel ansteckend sein, daher die Multiplikation mit 1/3. Falls es mehr Infizierte gibt als an der Geräuschentstehung beteiligte, geht das System davon aus, dass alle am Geräusch beteiligten Emittenten infiziert sind, und die gesamten Emissionen werden ohne Abschlag angerechnet.

In einer weiteren Ausführungsform werden Abschnitte von zeitlichen Verläufen von akustischen Größen und/oder daraus resultierende Emissionen, die keinem Emittenten zugeordnet werden können, beim Ermitteln der Konzentration berücksichtigt. Dies kann beispielsweise mit einem Faktor geschehen oder durch den beschriebenen fiktiven Emittenten. So kann sichergestellt werden, dass alle im Volumen entstehenden Emissionen auch in die Berechnung der Konzentration einfließen.

Die Aufgabe wird weiterhin gelöst durch ein Verfahren zum Ermitteln einer Inhalationsdosis für zumindest eine Person im Volumen zu einem Zeitpunkt. Dazu wird eine Konzentration, insbesondere ein Zeitverlauf der Konzentration, durch das erfindungsgemäße Verfahren ermittelt und die Inhalationsdosis der Person auf Basis der Konzentration ermittelt. So kann für eine reale Person (einen Emittenten) und/oder eine fiktive Person ein Risiko direkt quantifiziert werden und Maßnahmen abgeleitet werden. Da die Inhalationsdosis eine Zeitabhängige Größe ist, wird durch Betrachtung der Inhalationsdosis die Genauigkeit einer Risikobestimmung erheblich verbessert, da eine hohe Konzentration bereits am Anfang einer Besprechung (z. B. initiales Singen) deutlich mehr ins Gewicht fällt als eine abschließendes Singen.

In einer weiteren Ausführungsform wird die Inhalationsdosis auf Basis eines Integrals über das Produkt von Konzentration von potentiell infektiösen Aerosol-Partikeln (Schadstoffkonzentration) und einem Atemluftbedarf zum Zeitpunkt ermittelt. Der Atemluftbedarf kann dabei gemittelt und konstant gewählt werden oder dynamisch abhängig von diversen Parametern. Der Atemluftbedarf hängt von der körperlichen Aktivität ab, wird also für die Nutzer eines Besprechungsraums einen anderen Wert haben als für Nutzer einer Sporthalle. Es ist technisch möglich, den Atemluftbedarf individuell und zeitabhängig zu messen oder zu schätzen, z.B. mittels eines Fitnessarmbands, allerdings ist dies keine notwendige Voraussetzung für die Anwendung des erfindungsgemäßen Verfahrens. Der Ansatzwert des Atemluftbedarfs wird vorzugsweise in einem individuell konfigurierbaren App-Client auf dem Smartphone des Nutzers eingestellt. Vorzugsweise wird außerdem eine Schnittstelle zu einem Fitnessarmband oder einem ähnlichen Gerät vorgesehen, so dass alternativ ein Echtzeitwert für den Atemluftbedarf automatisch übernommen werden kann, sofern verfügbar. Für eine vorzugsweise vorgesehene, Smartphone-unabhängige Anzeige im Raum selbst, wird ein fester Wert für den Atemluftbedarf gesetzt, der nur berücksichtigt, ob es sich bei dem Raum um eine Turnhalle oder ein Klassenzimmer usw. handelt. Die Vorrichtung unterstellt bei der vorzugsweisen Berechnung einer für alle Anwesenden gleichen Inhalationsdosis also eine für den bestimmungsgemäßen Gebrauch des Raums typische körperliche Aktivität aller Menschen darin.

Die Aufgabe wird weiterhin durch eine in Anspruch 11 beanspruchte Vorrichtung zum Ermitteln einer Konzentration von potentiell infektiösen Aerosol-Partikeln in einem Volumen durch das beschriebene Verfahren gelöst. Die Vorrichtung umfasst dabei eine Erfassungseinrichtung, insbesondere ein Mikrofonarray, die zum Erfassen von zeitlichen Verläufen von ein oder mehreren akustischen Größen im Volumen ausgebildet ist. Weiterhin umfasst die Vorrichtung eine Auswerteeinrichtung, die zum Ermitteln einer Emission von Aerosol-Partikeln für wenigstens einen der Emittenten basierend auf dem erfassten zeitlichen Verlauf der akustischen Größe ausgebildet ist. Ferner ist die Vorrichtung zum Ermitteln der Konzentration basierend auf der wenigstens einen Emission ausgebildet. Eine einfache Ausführungsform kann ein Smartphone mit den integrierten Mikrofonen darstellen. Weiterhin ist eine dedizierte Vorrichtung mit integrierter Signalspeicherung und Verarbeitung denkbar. Eine Cloudanbindung ist nicht notwendig, da die notwendigen Rechenprozesse keine sonderlich hohen Anforderungen an die Rechenleistung stellen und selbst von energieeffizienten Prozessoren (bspw. auf ARM-Architektur) durchgeführt werden können. Weiterhin sind KIbasierte Algorithmen denkbar, die u. a. zur Stimmsignaturerkennung eingesetzt werden. Hier ist denkbar, dass hinsichtlich der Berechnung von neuronalen Netzen optimierte Prozessoren zum Einsatz kommen.

In einer weiteren Ausführungsform weist die Vorrichtung zumindest eine Schnittstelle auf, die zum Anbinden von bzgl. der Vorrichtung externen Erfassungseinrichtungen, insbesondere Smartphones und/oder Mikrofone, ausgebildet ist. Werden die Erfassungseinrichtungen näher an einzelne Emittenten gerückt und gibt es eine größere Anzahl an Erfassungseinrichtungen für die Emittenten, erhöht sich die Erfassungsgenauigkeit. Es ist denkbar, dass auf einem Smartphone ein App-Client installiert wird, der die Erfassung der notwendigen zeitlichen Verläufe der akustischen Größen auf dem Smartphone des Emittenten durchführt, während die Berechnung der Konzentration letztendlich zentral in der Vorrichtung durchgeführt wird. Es ist ebenso denkbar, dass die Emission bereits auf dem Smartphone des Emittenten berechnet wird und nur die Bilanzierung der Emissionen zentral durchgeführt wird. Durch eine Kommunikation zwischen der Vorrichtung und den Endgeräten, z. B. über übliche Kommunikationsmittel wie WLAN oder Bluetooth, können entsprechende Parameter und deren Werte, wie Luftaustauschraten, problemlos ausgetauscht werden.

Die Aufgabe wird weiterhin durch durch eine weitere Ausführungsform der Vorrichtung gelöst, die eine Steuerung für eine Raumlüftung aufweist, die zum Ansteuern der Raumlüftung auf Basis einer Konzentration die nach einem der erfindungsgemäßen Verfahren ermittelt wurde, ausgebildet ist. Ergänzend oder alternativ kann die Steuerung auch zum Ansteuern der Raumlüftung auf Basis einer Inhalationsdosis gemäß dem beschriebenen Verfahren ausgebildet sein.

Die Aufgabe wird weiterhin durch durch eine weitere Ausführungsform der Vorrichtung gelöst, die eine Anzeigevorrichtung für einen Raum aufweist, die zum Ermitteln und Anzeigen einer Lüftungsempfehlung auf Basis einer Konzentration gemäß einem der erfindungsgemäßen Verfahren oder einer Inhalationsdosis nach einem der erfindungsgemäßen Verfahren ausgebildet ist.

Im Folgenden wird die Erfindung anhand der in den Figuren dargestellten Ausführungsbeispiele näher beschrieben und erläutert. Es zeigen:

FIG 1     schematisch einen Raum mit einer Vorrichtung zur Ermittlung einer Konzentration von potentiell infektiösen Aerosol-Partikeln,

FIG 2     schematisch eine Vorrichtung zur Ermittlung einer Konzentration von potentiell infektiösen Aerosol-Partikeln,

FIG 3     schematisch einen weiteren Raum mit einer alternativen Vorrichtung,

FIG 4     schematisch eine Vorrichtung, die zur Auswertung mehrerer zeitlicher Verläufe ausgebildet ist und

FIG 5     schematisch eine Vorrichtung zum Ermitteln einer Inhalationsdosis.

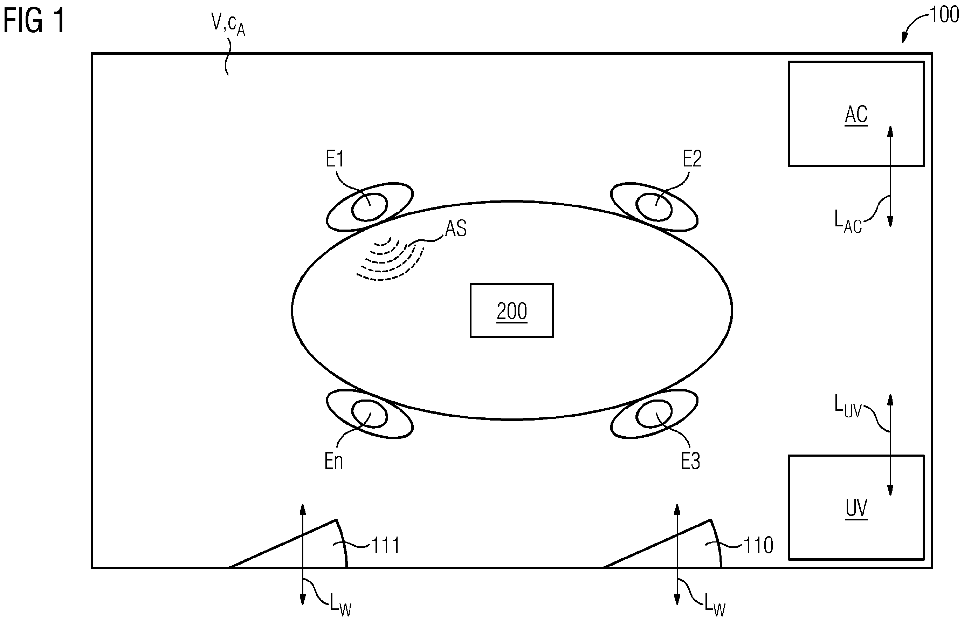

FIG 1 zeigt schematisch einen Raum 100 mit einer Vorrichtung 200 zur Ermittlung einer Konzentration $c_A$ von potentiell infektiösen Aerosol-Partikeln. Die Konzentration bezieht sich dabei auf ein Volumen V des Raumes 100. Im Volumen V, also im Raum 100 befinden sich 4 Personen. Diese Personen werden als Emittenten E1,...,En des Aerosols angesehen. Der Emittent E1 spricht dabei, was als akustische Größe AS eingezeichnet ist. Die Vorrichtung 200 ist dazu ausgebildet aus dieser akustischen Größe AS, bzw. deren Zeitverlauf, eine Konzentration $c_A$ von potentiell infektiösen Aerosol-Partikeln im Raum 100 bzw. im Volumen V zu ermitteln.

Weiterhin sind im Raum 100 Fenster 110, 111 vorhanden. Diese Fenster verursachen, wenn sie geöffnet sind, eine Luftaustauschrate $L_W$ durch die geöffneten Fenster 110, 111. Eine Klimaanlage AC verursacht eine Luftaustauschrate $L_{AC}$. Ein Luftreinigungsgerät, z.B. mit Luftreinigung durch UV-Licht oder einen entsprechenden Filter, verursacht eine $L_{UV}$ Luftreinigungsrate $L_{UV}$.

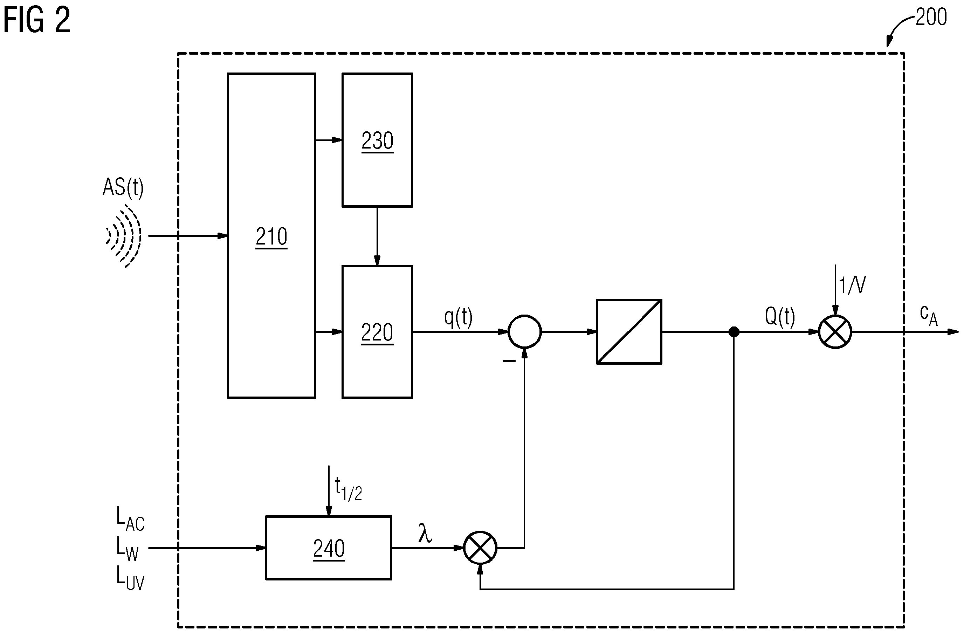

FIG 2 zeigt schematisch eine Vorrichtung 200 zur Ermittlung einer Konzentration $c_A$ von potentiell infektiösen Aerosol-Partikeln, wie sie in FIG 1 zum Einsatz kommt, dabei werden die aus FIG 1 bekannten Bezugszeichen weiterverwendet. Ein Zeitverlauf der akustischen Größe AS(t) wird durch eine Erfassungseinrichtung 210, z.B. durch ein Mikrofon, erfasst. Der Zeitverlauf der akustischen Größe AS(t) wird wiederum einer Auswerteeinrichtung 220 für akustische Größen zur Verfügung gestellt. Die Auswerteeinrichtung 220 kann dabei bspw. ein akustisches Signal - eine Audioaufnahme hinsichtlich verschiedener Parameter untersuchen. So kann die Auswerteeinrichtung 220 zur Berechnung einer Emissionsrate q(t) ausgebildet sein, wobei die Emissionsrate q(t) bspw. als proportional zur Amplitude eines Audiosignals oder zum Schalldruckpegel-Verlauf im Volumen oder einzelner Emittenten angenommen werden kann. Die Auswerteeinrichtung 220 kann dabei für jeden Emittenten E1,...,En eine eigene Emissionsrate q(t) berechnen, dies kann beispielsweise auf Basis von Stimmprofilanalysen durchgeführt werden. Zur weiteren Verbesserung der Vorrichtung ist eine Klassifizierungseinrichtung 230 vorhanden, die zur Erkennung und Klassifizierung von akustischen Ereignissen AE (im Englischen: acoustic events) in den akustischen Größen AS ausgebildet ist. So können beispielsweise Husten und/oder Niesen, Schreien erkannt werden und zum Gewichten von akustischen Größen bzw. der daraus resultierenden Emissionsrate q verwendet werden.

Die Vorrichtung 200 kann die Anzahl der im Raum anwesenden Personen (Emittenten) bestimmen, dies kann bspw. einmalig durch den Besprechungsleiter geschehen. Weiterhin kann dann ein Wert für die Anzahl der mutmaßlich infizierten Personen angesetzt werden. Bis zur Größe einer Schulklasse (30 Emittenten) ist die Zahl der Emittenten unbedeutend, denn bis dahin wird pauschal von einem Infizierten ausgegangen. Für größere Gruppen muss die Zahl der Infizierten aber wenigstens näherungsweise ermittelt werden. Dies kann auf Basis der aktuellen Infektionszahlen geschehen. Da die Anzahl der anwesenden Personen nur zur groben Schätzung einer oberen Konfidenzschranke für die Anzahl der Infizierten verwendet wird, sind die Anforderungen an die Genauigkeit der Ermittlung der anwesenden Personen gering.

Die Auswerteeinrichtung 220 führt vorzugsweise eine Stimmanalyse und eine räumliche Lokalisierung der Emittenten (Sprecher/Geräuschquellen) durch und weist darauf basierend die Anteile der akustischen Größe einzelnen Emittenten zu. Zu diesem Zweck kann einem Großteil oder sogar allen Emittenten vorzugsweise ein Stimmprofil und ein Ort im Raum zugeordnet werden. Der Ort hilft bei der Unterscheidung im Fall ähnlicher Stimmen, oder wenn die Stimme z.B. durch Schreien unkenntlich wird, während das Stimmprofil oft die Verfolgung eines Emittenten bei Positionswechseln in Raum ermöglicht. Technisch bewerkstelligt werden Stimmanalyse und Ortung z. B. durch die Berechnung der Stimmformanten F1, F2, F3 und F4. Diese lassen sich mittels Fast Fourier Transformation (FFT) aus dem Rohsignal extrahieren und sind charakteristisch für jeden Menschen. Die Ortung kann durch ein Mikrofonarray bewerkstelligt werden. Werden die Mikrofone durch eine gemeinsame Zeitbasis gesteuert, so kann die Phaseninformation in der FFT zur Erkennung der Richtung herangezogen werden. Es ist auch möglich, mit den Features Formant und Phase die Erkennung der Emittenten einem künstlichen neuronalen Netz zu überlassen. Nach Beginn der Zusammenkunft im Raum wird das System immer mehr Emittenten in der Reihenfolge ihrer Äußerungen erkennen und vorzugsweise für jeden von ihnen eine individuelle Emission Q und/oder Emissionshistorie (ein zeitverlauf der Emission Q) anlegen.

Um den vorliegenden Fall einfach zu gestalten wird nun weiterhin von einzelnen Größen gesprochen - alles Schritte können aber auch für alle Emittenten oder eine ausgewählte Gruppe durchgeführt werden.

Auf Basis der Auswertung der Zeitverläufe der akustischen Größen AS und ggf. nach Gewichtung durch die akustischen Events AE kann nun eine Emissionsrate q(t) für den ausgewählten Emittenten bestimmt werden. Eine kontinuierliche Integration der Emissionsrate q(t) liefert den aktuellen Wert der Emission Q bzw. deren Zeitverlauf Q(t) für den ausgewählten Emittenten. Um die Genauigkeit der Bestimmung der Konzentration bzw. Emission Q erheblich zu verbessern wird zusätzlich im vorliegenden Ausführungsbeispiel vor der Integrierung der Emissionsrate q(t) noch eine Abnahme-Rate λ von Aerosol-Partikeln basierend auf Luftaustauschraten bzw. Luftreinigungsraten $L_{AC}$, $L_W$, $L_{UV}$ berücksichtigt. Eine Einrichtung 240 zur Ermittlung einer Aerosol-Partikel-Abnahme-Rate λ im Volumen V führt dies durch. Die dazu notwendigen Parameter könnten einmalig manuell in eine Applikation zur Konfiguration der Einrichtung 240 eingegeben werden oder aus entsprechenden Lüftungssteuerungen ausgelesen werden. Auch ein Messen einer CO2-Konzentration ist denkbar, um auf die Luftaustauschrate L zu schließen.

Auch die Halbwertszeit $t_{1/2}$ der Ansteckungswirkung der betrachteten infektiösen Partikeln kann in der Abnahme-Rate λ berücksichtigt werden, indem sie einem entsprechenden Schwund von Partikeln gleichgesetzt wird. Die Abnahme-Rate λ wird mit der aktuellen absoluten Emission (Q) multipliziert und mit der Emissionsrate q(t) bilanziert.

Als Differentialgleichungen lässt sich die Konzentration $c_A$, bzw. deren zeitliche Änderung, wie folgt darstellen:

$$\frac{d}{dt} c_a(t) = \frac{q(t)}{V} - \left[ L_W(t) + L_{AC}(t) + L_{UV}(t) + \frac{\ln 2}{t_{1/2}} \right] * c_a(t)$$

Da die Konzentration $c_A$ die relevante Emission Q dividiert durch das Volumen V ist, kann auf Basis der Emission Q die Gleichung wie folgt dargestellt werden:

$$\frac{d}{dt} Q(t) = q(t) - \left[ L_W(t) + L_{AC}(t) + L_{UV}(t) + \frac{\ln 2}{t_{1/2}} \right] * Q(t)$$

So entspricht die Emission Q der im Raum unter Berücksichtigung von Reduzierungseffekten tatsächlich vorhandene Emission. Die Abnahme-Rate λ ist dabei die Summe der einzelnen Anteile L sowie der Abnahme durch die Halbwertszeit:

$$\lambda = L_W(t) + L_{AC}(t) + L_{UV}(t) + \frac{\ln 2}{t_{1/2}}$$

Das in FIG 2 gezeigte Blockschema lässt sich sehr gut in Echtzeit mitrechnen und eignet sich daher besonders gut für eine Umsetzung in der Vorrichtung 200. D. h. die Werte können mit einer kurzen Verzögerung für die Auswerteeinrichtung 220 und/oder die Klassifizierungseinrichtung 230 direkt in Echtzeit berechnet werden. Die Emission Q wird mit dem Kehrwert des Volumens multipliziert, um die Konzentration $c_A$ zu erhalten. Um eine genaue Konzentration $c_A$ zu ermitteln, die das Risiko nicht stark überbewertet, wird zur Ermittlung der Konzentration $c_A$ vorzugsweise nur die Emission Q desjenigen Emittenten E1, ..., En verwendet, der für die meisten Emissionen Q verantwortlich ist. Der Emittent E1, ..., En, der für die meisten Emissionen verantwortlich ist, kann sich im Laufe der Zeit ändern. So wird bspw. ein Referent die meisten Emissionen Q abgegeben, wobei ein Moderator anfangs, in der Zeitspanne bevor der Referent vorträgt, verantwortlich für die meisten Emissionen Q ist. Das Umschalten zwischen den Emissionen Q kann dabei nahtlos geschehen, da das System für jeden (akustisch aktiven) Emittenten eine spezifische Emission berechnen kann. Für Emittenten E1,...,En, die lediglich im Raum 100 sitzen und atmen kann ein Basiswert in der Emission Q berücksichtigt werden.

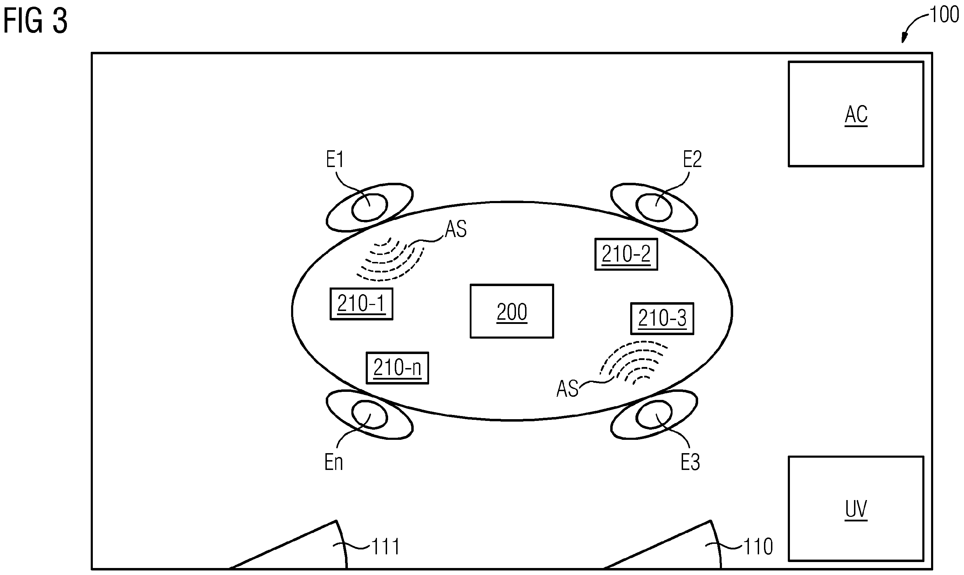

FIG 3 zeigt den Raum 100 aus FIG 1, wobei die Vorrichtung 200 um jeweils eine Erfassungseinrichtung 210-1,...,210-n, umfassend je zumindest ein Mikrofon, für jeden der Emittenten E1, ..., En erweitert wurde. Die Erfassungseinrichtungen 210-1,...,210-n können dabei drahtlos oder per Kabel an die Vorrichtung angebunden sein. Es ist denkbar, dass die akustischen Größen bereits in den Erfassungseinrichtungen 210-1,...,210-n (vor)-ausgewertet werden. Dies kann beispielsweise der Fall sein, wenn jeder der Emittenten E1, ..., En ein eigenes Smartphone als Erfassungseinrichtung 210 nutzt. Auch die Erfassung einer Anzahl der Emittenten E1, ..., En lässt sich so einfach bewerkstelligen. Es ist weiterhin denkbar, dass sich zwei Emittenten eine Erfassungseinrichtung 210 teilen und dies auch in der Erfassungseinrichtung 210 so konfigurieren.

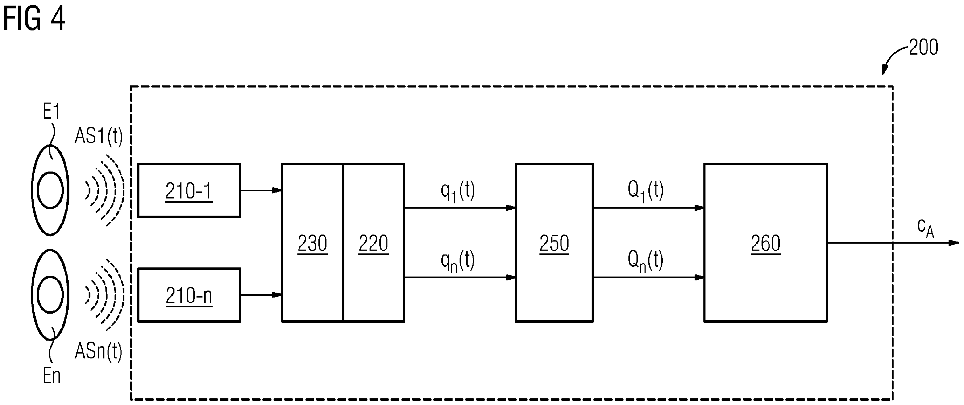

FIG 4 zeigt schematisch eine Vorrichtung 200, die zur Auswertung mehrerer zeitlicher Verläufe von akustischen Größen AS1, ...,ASn von mehreren Emittenten E1,....,En ausgebildet ist. Im vorliegenden Fall soll davon ausgegangen werden, dass die Erfassungseinrichtungen 210-1 und 210-n jeweils für jeden der Emittenten E1 und En eine akustische Größe, z. B. einen Zeitverlauf von Schalldruckpegel und/oder ein Audiosignal, zur Verfügung stellen. Das Zuordnen der akustischen Größen AS1, ..., ASn zu den Emittenten mit weniger Erfassungseinrichtungen 210 als Emittenten ist ebenso möglich, dies wurde weiter oben bereits beschrieben. In der vorliegenden Vorrichtung 200 ist eine Klassifizierungseinrichtung 230, die akustische Events AE erkennt und gewichtet vorhanden. Die Auswerteeinrichtung 220 ermittelt für jeden Emittenten E1,...,En eine Emissionsrate $q_1$,...,$q_n$. Eine Einrichtung 250 zur Ermittlung der Emission Q ermittelt die Emission Q1, Qn zum Zeitpunkt t für jeden der Emittenten E1,....,En. Die Einrichtung 250 berücksichtigt dabei vorteilhaft die Abnahme-Rate λ, wie es in FIG 2 gezeigt ist. So kann schließlich die Einrichtung 260 zur Ermittlung der potentiell Infektiösen Konzentration $c_A$ z. B. durch Auswahl desjenigen Emittenten E1,....,En, der für die größte Emission Q verantwortlich ist, die Konzentration $c_A$ bestimmen. Ein paralleles Berechnen aller Größen für alle Emittenten E1,...,En ist möglich.

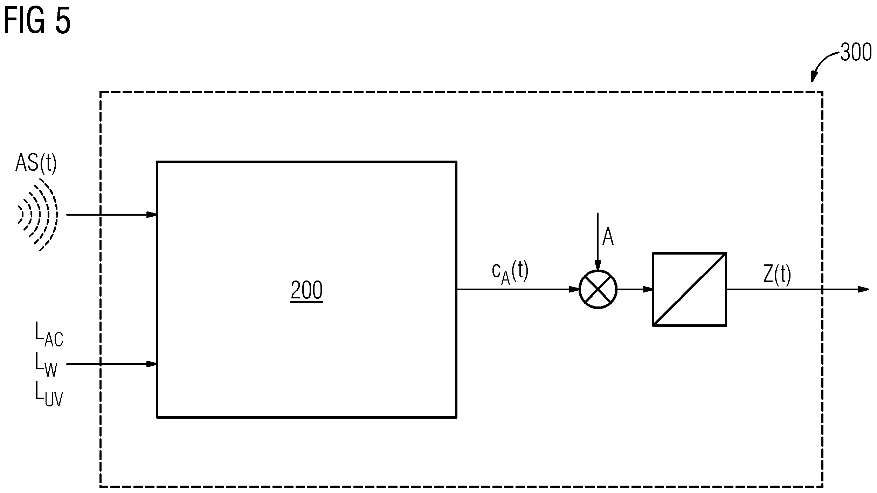

FIG 5 zeigt schematisch eine Vorrichtung 300 zum Ermitteln einer Inhalationsdosis Z. Noch genauer kann das Ansteckungsrisiko quantifiziert werden, wenn nicht nur die Konzentration $c_A$ im Volumen bestimmt wird, sondern auch für eine fiktive oder für eine (oder jede) der anwesenden Personen eine zeitabhängige Inhalationsdosis Z zu einem Zeitpunkt t bestimmt wird. Dazu wird ein Zeitverlauf der Konzentration $c_A$ von potentiell infektiösen Aerosol-Partikeln bestimmt. Die über die Anwesenheitszeit im Volumen V (z. B. im Raum 100) inhalierte Dosis Z ergibt sich aus dem Integral eines Atemluftbedarfs A und der Konzentration $c_A$ über die Zeit. Auch dieses Verfahren kann in Echtzeit abgebildet werden. Überschreitet die Inhalationsdosis Z zu einem Zeitpunkt einen kritischen Wert, so kann eine Lüftung empfohlen werden oder ein Warnsignal zum dringenden Verlassen des Raumes ausgegeben werden. So wird die Infektionswahrscheinlichkeit erheblich minimiert. Hierbei können Sicherheitsfaktoren berücksichtigt werden. Der Atemluftbedarf A kann dabei konstant gewählt oder zeitabhängig, bspw. für einen Sänger, angegebene werden.

Zusammenfassend betrifft die Erfindung ein Verfahren zum Ermitteln einer Konzentration ($c_A$) von potentiell infektiösen Aerosol-Partikeln in einem Volumen (V), z. B. in einem Besprechungszimmer. Die Erfindung betrifft weiterhin ein Verfahren zum Ermitteln einer Inhalationsdosis (Z), sowie eine Vorrichtung (200) zum Ermitteln einer Konzentration ($c_A$). Um die Ermittlung einer Konzentration ($c_A$) von potentiell infektiösen Aerosol-Partikeln in einem Volumen (V) mit Emittenten (E1,...,En) zu verbessern werden folgende Schritte vorgeschlagen:

- Erfassen zumindest eines zeitlichen Verlaufs einer akustischen Größe (AS) im Volumen (V), die mit ein oder mehreren der Emittenten (E1,...,En) assoziiert ist,
- Ermitteln einer Emission (Q) von Aerosol-Partikeln für wenigstens einen der Emittenten (E1,...,En) basierend auf dem erfassten zeitlichen Verlauf der akustischen Größe (AS) und
- Ermitteln der Konzentration ($c_A$) basierend auf der wenigstens einen Emission (Q).

Bezugszeichenliste

| | |
|---|---|
| 100 | Raum |
| 110, 112 | Fenster |
| AC | Klimaanlage |
| UV | Luftreinigungsvorrichtung |
| V | Volumen des Raums |
| E1, ..., En | Emittenten im Raum |

| | |
|---|---|
| 200 | Vorrichtung zur Ermittlung einer Konzentration von potentiell infektiösen Aerosol-Partikeln |

| | |
|---|---|
| 210 | Erfassungseinrichtung - z. B. Mikrofon |
| 220 | Auswerteeinrichtung für akustische Größen |
| 230 | Klassifizierungseinrichtung (Erkennung und Klassifizierung von akustischen Events) |
| 240 | Einrichtung zur Ermittlung einer Aerosol-Partikel Abnahme im Volumen |
| 250 | Einrichtung zur Ermittlung der Emission |
| 260 | Einrichtung zur Ermittlung der potentiell infektiösen Konzentration |

| | |
|---|---|
| t | Zeit |
| Q | Emission der Aerosol-Partikel |
| q | Emissionsrate der Aerosol-Partikel |
| $c_A$ | Konzentration der Aerosol-Partikel |

| | |
|---|---|
| A | Atemluftbedarf einer Person |
| Z | Inhalationsdosis |

| | |
|---|---|
| AS | akustische Größe |
| AE | akustisches Event |

$\lambda$    Abnahme-Rate von Aerosol-Partikeln

$L_{AC}$    Luftaustauschrate durch eine Klimaanlage
$L_{W}$    Luftaustauschrate durch geöffnete Fenster
$L_{UV}$    Luftaustauschrate durch Luftreiniger

## Patentansprüche

1. Verfahren zum Ermitteln einer Konzentration ($c_A$) von potentiell infektiösen Aerosol-Partikeln in einem Volumen (V), wobei das Volumen (V) ein oder mehrere Emittenten (E1, ..., En) des Aerosols umfasst, umfassend die Schritte:

   - Erfassen zumindest eines zeitlichen Verlaufs einer akustischen Größe (AS) im Volumen (V), die mit ein oder mehreren der Emittenten (E1, ..., En) assoziiert ist,
   - Ermitteln einer Emission (Q) von Aerosol-Partikeln für wenigstens einen der Emittenten (E1, ..., En) basierend auf dem erfassten zeitlichen Verlauf der akustischen Größe (AS), wobei die Emission (Q) durch Integration einer Emissionsrate (q) ermittelt wird, wobei die Emissionsrate (q) in Abhängigkeit des zumindest einen zeitlichen Verlaufs der akustischen Größe (AS) ermittelt wird und
   - Ermitteln der Konzentration ($c_A$) basierend auf der wenigstens einen Emission (Q), wobei für eine Mehrzahl von Emittenten (E1, ..., En) jeweils eine Emission (Q) bestimmt wird und wobei die Konzentration ($c_A$) basierend auf der größten der bestimmten Emissionen (Q) ermittelt wird.

2. Verfahren nach Anspruch 1, wobei eine der akustischen Größen (AP) einen Schalldruckpegel und/oder ein Audiosignal im Volumen (V) umfasst.

3. Verfahren nach Anspruch 1 oder 2, wobei zumindest ein Teil von einem oder mehreren der zeitlichen Verläufe der akustischen Größe (AS) einem der Emittenten (E1, ..., En) und/oder einer Gruppe von Emittenten zugeordnet wird.

4. Verfahren nach einem der vorhergehenden Ansprüche, wobei zum Ermitteln der Konzentration ($c_A$) ein Anteilsfaktor zur Gewichtung der Emissionen (Q) berücksichtigt wird.

5. Verfahren nach einem der vorhergehenden Ansprüche, wobei zum Ermitteln der Konzentration ($c_A$) und/oder der Emission (Q) eine Abnahme-Rate ($\lambda$) von potentiell infektiösen Aerosol-Partikeln, insbesondere durch eine Fensterlüftung, eine Klima-Anlage, eine Luftreinigung und/oder ein Absterben von Viren, berücksichtigt wird.

6. Verfahren nach einem der vorhergehenden Ansprüche, wobei zum Ermitteln einer Abnahme-Rate ($\lambda$) von potentiell infektiösen Aerosol-Partikeln ein in der Atemluft vorkommendes Gas, insbesondere $CO_2$ und/oder $H_2$, erfasst wird.

7. Verfahren nach einem der vorhergehenden Ansprüche, umfassend eine Gewichtung der Emission (Q) auf Basis eines Erkennens von akustischen Ereignissen (AE), insbesondere Husten, Niesen, Sprechen, Schreien und/oder Singen, im zeitlichen Verlauf der akustischen Größe (AS).

8. Verfahren nach einem der vorhergehenden Ansprüche, wobei Abschnitte von zeitlichen Verläufen von akustischen Größen (AS) und/oder Abschnitte von daraus resultierende Emissionen (Q), die keinem Emittenten (E,...,En) zugeordnet werden können, beim Ermitteln der Konzentration ($c_A$) und/oder der Emission (Q) berücksichtigt werden.

9. Verfahren zum Ermitteln einer Inhalationsdosis (Z), umfassend ein Ermitteln einer Konzentration ($c_A$) durch ein Verfahren nach einem der vorhergehenden Ansprüche und Ermitteln einer erwarteten Inhalationsdosis (Z) für zumindest eine Person im Volumen (V) zu einem Zeitpunkt (t).

10. Verfahren nach Anspruch 9, wobei die Inhalationsdosis (Z) auf Basis eines Integrals von Konzentration ($c_A$) und einem Atemluftbedarf (A) zum Zeitpunkt (t) ermittelt wird.

11. Vorrichtung (200) zum Ermitteln einer Konzentration ($c_A$) von potentiell infektiösen Aerosol-Partikeln in einem Volumen (V) durch ein Verfahren nach einem der vorhergehenden Ansprüche, umfassend:

   - eine Erfassungseinrichtung, insbesondere ein Mikrofonarray, die zum Erfassen von zeitlichen Verläufen von einer oder mehreren akustischen Größen (AS) im Volumen (V) ausgebildet ist und

- eine Auswerteeinrichtung, die zum Ermitteln einer Emission (Q) von Aerosol-Partikeln für wenigstens einen der Emittenten (E1, ..., En) basierend auf dem erfassten zeitlichen Verlauf der akustischen Größe (AS) ausgebildet ist, indem die Emission (Q) durch Integration einer Emissionsrate (q) ermittelt wird, wobei die Emissionsrate (q) in Abhängigkeit des zumindest einen zeitlichen Verlaufs der akustischen Größe (AS) ermittelt wird, und wobei die Vorrichtung (200) zum Ermitteln der Konzentration ($c_A$) basierend auf der wenigstens einen Emission (Q) ausgebildet ist, indem für eine Mehrzahl von Emittenten (E1, ..., En) jeweils eine Emission (Q) bestimmt wird und wobei die Konzentration ($c_A$) basierend auf der größten der bestimmten Emissionen (Q) ermittelt wird.

12. Vorrichtung (200) nach Anspruch 11, aufweisend zumindest eine Schnittstelle, die zum Anbinden von bzgl. der Vorrichtung (200) externen Erfassungseinrichtungen, insbesondere Smartphones und/oder Mikrofone, ausgebildet ist.

13. Vorrichtung nach einem der vorstehenden Ansprüche 11 oder 12, mit einer Steuerung, ausgebildet zum Ansteuern einer Raumlüftung und/oder Luftreinigungsanlage auf Basis einer Konzentration ($c_A$) gemäß einem Verfahren nach Anspruch 1 bis 8 und/oder auf Basis einer Inhalationsdosis (Z) nach Anspruch 9 oder 10.

**Claims**

1. Method for ascertaining a concentration ($c_A$) of potentially infectious aerosol particles in a volume (V), wherein the volume (V) comprises one or more emitters (E1, ..., En) of the aerosol, comprising the following steps:

    - recording at least one time profile of an acoustic variable (AS) in the volume (V), said variable being associated with one or more of the emitters (E1,...,En),
    - ascertaining an emission (Q) of aerosol particles for at least one of the emitters (E1,...,En) on the basis of the recorded time profile of the acoustic variable (AS), wherein the emission (Q) is ascertained by integrating an emission rate (q), wherein the emission rate (q) is ascertained as a function of the at least one time profile of the acoustic variable (AS), and
    - ascertaining the concentration ($c_A$) on the basis of the at least one emission (Q), wherein an emission (Q) is determined for each of a plurality of emitters (E1, ..., En) and wherein the concentration ($c_A$) is ascertained on the basis of the largest of the determined emissions (Q).

2. Method according to Claim 1, wherein one of the acoustic variables (AP) comprises a sound pressure level and/or an audio signal in the volume (V).

3. Method according to Claim 1 or 2, wherein at least one portion of one or more of the time profiles of the acoustic variable (AS) is assigned to one of the emitters (E1, ..., En) and/or a group of emitters.

4. Method according to any of the preceding claims, wherein a proportion factor for weighting the emissions (Q) is taken into account to ascertain the concentration ($c_A$).

5. Method according to any of the preceding claims, wherein a decrease rate ($\lambda$) of potentially infectious aerosol particles, in particular due to window ventilation, an air-conditioning system, air purification and/or a death rate of viruses, is taken into account to ascertain the concentration ($c_A$) and/or the emission (Q).

6. Method according to any of the preceding claims, wherein a gas, in particular $CO_2$ and/or $H_2$, occurring in the respiratory air is detected to ascertain a decrease rate ($\lambda$) of potentially infectious aerosol particles.

7. Method according to any of the preceding claims, comprising a weighting of the emission (Q) on the basis of a detection of acoustic events (AE), in particular coughing, sneezing, speaking, shouting and/or singing, in the time profile of the acoustic variable (AS).

8. Method according to any of the preceding claims, wherein segments of time profiles of acoustic variables (AS) and/or segments of emissions (Q) resulting therefrom, which cannot be assigned to any emitter (E,...,En), are taken into account in ascertaining the concentration ($c_A$) and/or the emission (Q).

9. Method for ascertaining an inhalation dose (Z), comprising ascertaining a concentration ($c_A$) by means of a method according to any of the preceding claims, and ascertaining an expected inhalation dose (Z) for at least one person in the volume (V) at a time (t).

10. Method according to Claim 9, wherein the inhalation dose (Z) is ascertained on the basis of an integral of the concentration ($c_A$) and a respiratory air demand (A) at the time (t) .

11. Apparatus (200) for ascertaining a concentration ($c_A$) of potentially infectious aerosol particles in a volume (V) by means of a method according to any of the preceding claims, comprising:

- a detection device, in particular a microphone array, which is designed for recording time profiles of one or more acoustic variables (AS) in the volume (V), and
- an evaluation device designed for ascertaining an emission (Q) of aerosol particles for at least one of the emitters (E1, ..., En) on the basis of the recorded time profile of the acoustic variable (AS) by means of the emission (Q) being ascertained by integrating an emission rate (q), wherein the emission rate (q) is ascertained as a function of the at least one time profile of the acoustic variable (AS), and

wherein the apparatus (200) is designed for ascertaining the concentration ($c_A$) on the basis of the at least one emission (Q) by means of an emission (Q) being determined for each of a plurality of emitters (E1, ..., En), and wherein the concentration ($c_A$) is ascertained on the basis of the largest of the determined emissions (Q).

12. Apparatus (200) according to Claim 11, comprising at least one interface which is designed for connecting detection devices external to the apparatus (200), in particular smartphones and/or microphones.

13. Apparatus according to either of the preceding Claims 11 or 12, having a controller, designed for controlling a room ventilation and/or air purification system on the basis of a concentration ($c_A$) according to a method according to Claims 1 to 8 and/or on the basis of an inhalation dose (Z) according to Claim 9 or 10.

**Revendications**

1. Procédé de détermination de la concentration ($c_A$) de particules d'aérosol infectieuses potentiellement dans un volume (V), dans lequel le volume (V) renferme un ou plusieurs émetteurs (E1, ..., En) de l'aérosol, comprenant les stades :

- relevé d'au moins une courbe en fonction du temps d'une grandeur (AS) acoustique dans le volume (V), qui est associée à un ou à plusieurs des émetteurs (E1,...,En),
- détermination d'une émission (Q) de particules d'aérosol pour au moins l'un des émetteurs (E1, ..., En) sur la base de la courbe en fonction du temps, qui est relevée, de la grandeur (AS) acoustique, dans lequel on détermine l'émission (Q) par intégration d'un taux (q) d'émission, dans lequel on détermine le taux (q) d'émission en fonction de la au moins une courbe en fonction du temps de la grandeur (AS) acoustique, et
- détermination de la concentration ($c_A$) sur la base de la au moins une émission (Q), dans lequel on détermine, pour une pluralité d'émetteurs (E1, ..., En), respectivement une émission (Q), et dans lequel on détermine la concentration ($c_A$) sur la base de la plus grande des émissions (Q) déterminées.

2. Procédé suivant la revendication 1, dans lequel l'une des grandeurs (AP) acoustiques comprend un niveau de la pression acoustique et/ou un signal audio dans le volume (V).

3. Procédé suivant la revendication 1 ou 2, dans lequel on affecte au moins une partie d'une ou de plusieurs des courbes en fonction du temps de la grandeur (AS) acoustique à l'un des émetteurs (E1, ..., En) et/ou à un groupe d'émetteurs.

4. Procédé suivant l'une des revendications précédentes, dans lequel, pour la détermination de la concentration ($c_A$), on prend en compte un facteur de proportionnalité pour la pondération des émissions (Q).

5. Procédé suivant l'une des revendications précédentes, dans lequel, pour la détermination de la concentration ($c_A$) et/ou de l'émission (Q), on prend en compte un taux ($\lambda$) de décroissance de particules d'aérosol infectieuses potentiellement, en particulier par une aération par une fenêtre, par une installation de conditionnement d'air, par une épuration de l'air et/ou par un dépérissement de virus.

6. Procédé suivant l'une des revendications précédentes, dans lequel, pour la détermination d'un taux ($\lambda$) de décroissance de particules d'aérosol infectieuses potentiellement, on détecte un gaz se produisant dans l'air de respiration, en particulier du $CO_2$ ou de l'$H_2$.

7. Procédé suivant l'une des revendications précédentes, comprenant une pondération de l'émission (Q) sur la base d'une détection d'évènements (AE) acoustiques, en particulier de toux, d'éternuements, de paroles, de cris et/ou de chants, dans la courbe en fonction du temps de la grandeur (AS) acoustique.

8. Procédé suivant l'une des revendications précédentes, dans lequel on prend en compte, lors de la détermination de la concentration ($c_A$) ou d'une émission (Q), des parties de courbe en fonction du temps de grandeurs (AS) acoustiques et/ou des parties d'émission (Q), qui s'ensuivent, qui ne peuvent pas être associées à des émetteurs (E, ..., En).

9. Procédé de détermination d'une dose (Z) d'inhalation, comprenant une détermination d'une concentration ($c_A$) par un procédé suivant l'une des revendications précédentes, et une détermination d'une dose (Z) d'inhalation escomptée pour au moins une personne dans le volume (V) à un instant (t).

10. Procédé suivant la revendication 9, dans lequel on détermine la dose (Z) d'inhalation sur la base d'une intégrale de la concentration ($c_A$) et d'un besoin (A) d'air respiratoire à l'instant (t).

11. Installation (200) de détermination de la concentration ($c_A$) de particules d'aérosol infectieuses potentiellement dans un volume (V) par un procédé suivant l'une des revendications précédentes, comprenant :

   - un dispositif de détection, notamment un réseau de microphones, qui est constitué pour relever des courbes en fonction du temps d'une ou de plusieurs grandeurs (AS) acoustiques dans le volume (V), et
   - un dispositif d'analyse, qui est constitué pour la détermination d'une émission (Q) de particules d'aérosol pour au moins l'un des émetteurs (E1, ..., En) sur la base de la courbe relevée en fonction du temps de la grandeur (AS) acoustique, en déterminant l'émission (Q) par intégration d'un taux (q) d'émission, et
   dans lequel on détermine le taux (q) d'émission en fonction de la au moins une courbe en fonction du temps de la grandeur (AS) acoustique, et
   dans lequel l'installation (200) est constituée pour la détermination de la concentration ($c_A$) sur la base de la au moins une émission (Q), en déterminant respectivement une émission (Q) pour une pluralité d'émetteurs (E1, ..., En), et dans lequel on détermine la concentration ($c_A$) sur la base de la plus grande des émissions (Q), qui ont été déterminées.

12. Installation (200) suivant la revendication 11, comportant au moins une interface, qui est constituée pour le raccordement de dispositifs de détection extérieurs par rapport à l'installation (200), en particulier de smartphones et/ou de microphones.

13. Installation (200) suivant l'une des revendications 11 ou 12 précédentes, comprenant une commande constituée pour la commande d'une aération de pièce et/ou d'une installation d'épuration de l'air, sur la base d'une concentration ($c_A$) suivant un procédé suivant la revendication 1 à 8 et/ou sur la base d'une dose (Z) d'inhalation suivant la revendication 9 ou 10.

FIG 1

EP 3 995 824 B1

# FIG 2

EP 3 995 824 B1

FIG 3

FIG 4

EP 3 995 824 B1

FIG 5

EP 3 995 824 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ASADI SIMA ; CAPPA CHRISTOPHER D ; WEXLER ANTHONY S ; BOUVIER NICOLE M ; RISTENPART WILLIAM D.** *The Impact of Vocalization Loudness on COVID-19 Transmission in Indoor Spaces, https://arxiv.org/ftp/ arxiv/papers/2009/2009.04060.pdf*